# EUROPÄISCHE PATENTSCHRIFT

(11) **EP 3 002 382 B1**
(45) Veröffentlichungstag und Bekanntmachung des Hinweises auf die Patenterteilung: **03.01.2018**
(21) Anmeldenummer: 15002755.5
(22) Anmeldetag: 24.09.2015
(51) Int. Cl.: B29C 44/06, B29K 105/04, B29K 75/00, E04D 12/00, B32B 37/24, B32B 38/00

(54) **UNTERDACHBAHN**
ROOF UNDERLAY
SOUS-COUCHE DE TOITURE

(30) Priorität: 02.10.2014 DE 102014014376; 22.12.2014 DE 102014018950; 13.01.2015 DE 102015000092; 09.09.2015 EP 15002636
(43) Veröffentlichungstag der Anmeldung: 06.04.2016
(73) Patentinhaber: Ewald Dörken AG, 58313 Herdecke (DE)
(72) Erfinder: Schröer, Jörn, DE - 58313 Herdecke (DE); Lipps, Jochen, DE - 58089 Hagen (DE); Flaig, Ronald, DE - 51373 Leverkusen (DE); Harfmann, Carsten, DE - 60323 Frankfurt (DE)
(74) Vertreter: Von Rohr Patentanwälte Partnerschaft mbB

(56) Entgegenhaltungen:
- EP-A1- 0 757 139
- EP-A1- 2 065 534
- EP-A2- 1 400 348
- WO-A1-2007/012463
- WO-A1-2007/141027
- DE-A1- 3 216 695
- DE-U1- 29 623 295
- FR-A1- 2 934 350
- GB-A- 2 448 469
- US-A1- 2004 009 319
- US-A1- 2012 094 067

## Beschreibung

Die Erfindung betrifft eine Unterdachbahn, mit einer im verlegten Zustand nach außen gewandten Bewitterungsseite, mit mindestens einer wasserdampfdurchlässigen Trägerschicht und mindestens einer mit der Trägerschicht verbundenen, wasserundurchlässigen, wasserdampfdurchlässigen Funktionsschicht gemäß dem Oberbegriff des Patentanspruchs 1.

Eine gattungsgemäße Unterdachbahn ist bereits aus der EP 2 065 534 A1 bekannt. Die bekannte Unterdachbahn weist eine im verlegten Zustand nach innen gerichtete Langzeit-UV-stabilisierte Lage in Form eines Bikomponentenvlieses auf.

Aus der WO 2007/012463 A1 ist eine Bahn mit wenigstens einer Schutzschicht, einer Funktionsschicht und wenigstens einer Verstärkungsschicht vorgesehen, wobei die Verstärkungsschicht eine höhere Reißfestigkeit als die Schutzschicht aufweist. Als weitere Schicht kann eine Strahlenschutzschicht in Form einer Vakuumbeschichtung mit einem Metall vorgesehen sein.

Die DE 32 16 695 A1 stellt ein Dach mit einer auf einer Oberseite schützenden Schicht aus Bitumen unter Schutz, wobei die oberste Schicht des Dachaufbaus von einer Filzbahn gebildet ist, die auf der Schicht aus Bitumen befestigt ist.

Weitere Unterdachbahnen, die auch als Unterdeckbahnen bezeichnet werden, werden im Baubereich eingesetzt und haben die Aufgabe, die Dachkonstruktion vor Regen, Feuchtigkeit, Flugschnee und Staub zu schützen. Damit im Bau vorhandene Feuchtigkeit, beispielsweise Neubau-Feuchtigkeit oder die Feuchtigkeit aus bewohnten Bereichen des Daches, an die Umgebung abgegeben werden kann, ist es erforderlich, dass solche Unterdachbahnen eine ausreichende Durchlässigkeit für Wasserdampf aufweisen. Zu diesem Zweck ist in aller Regel eine Funktionsschicht vorgesehen, die eine hohe Wasserdampfdurchlässigkeit bei einer gleichzeitigen Undurchlässigkeit für Wasser in flüssiger Form sowie Staubpartikel oder ähnliches aufweist. Da derartige Funktionsschichten empfindlich gegenüber mechanischen Belastungen sind und zur Perforation oder zum Einreißen neigen, werden sie zur Herstellung einer Unterdachbahn mit einer Trägerschicht verbunden. Bei der Trägerschicht handelt es sich häufig um einen Vliesstoff mit einer hohen mechanischen Belastbarkeit.

Im Baubereich relevante Zeiträume liegen häufig im Bereich mehrerer Jahre oder Jahrzehnte. Aus diesem Umstand ergeben sich besondere Anforderungen an die Alterungsbeständigkeit von Unterdachbahnen. Sie sind zum einen teilweise großen Temperaturunterschieden und feuchter Witterung ausgesetzt. Zum anderen lässt der UV-Anteil des Sonnenlichts das Material einer Unterdachbahn beschleunigt altern, so dass es zu Beschädigungen kommen kann. Ganz besonders trifft dies auf die Phase der Freibewitterung zu, das heißt den Zeitraum vor dem Eindecken des Dachs. In Abhängigkeit von der Dachform und dem Dachbelag können allerdings auch nach dem Eindecken bis zu 50% der einfallenden UV-Intensität zur Unterdachbahn vordringen.

Unterdachbahnen, wie sie aus dem Stand der Technik bekannt sind und in der Praxis bisher eingesetzt werden, weisen häufig eine poröse Acrylatbeschichtung auf, die direkt auf ein Vlies aufgebracht ist. Derartig aufgebaute Unterdachbahnen zeichnen sich durch eine hohe Alterungsbeständigkeit gegenüber der Einwirkung von UV-Strahlen aus. In Bezug auf die Wasserdichtigkeit liegen sie jedoch meist am unteren Rand des für einen wirksamen Schutz der Baukonstruktion geeigneten Bereichs.

Darüber hinaus existieren Dachbahnen mit Extrusionsbeschichtungen, wobei beispielsweise eine wasserdampfdurchlässige TPU-Schicht auf ein Vlies aufgebracht wird. Hierbei bildet sich ein monolithischer Film, der eine Wasserdichtigkeit mit einer hinreichend hohen Wassersäule erreicht. Die Funktionsschicht weist jedoch insofern Schwächen auf, als Alterungserscheinungen auftreten, wenn diese UVreichem Sonnenlicht über mehrere Wochen ausgesetzt wird. Entsprechendes gilt, wenn die Funktionsschicht als poröse Folie, z. B. aus PP, ausgebildet ist.

DE 296 23 295 U offenbart eine Unterdachbahn gemäß dem Oberbegriff des ersten Anspruchs.

Im Ergebnis sind bekannte Unterdachbahnen also stets mit dem Nachteil verbunden, dass bei ihrer Auswahl vor der Verwendung abzuwägen ist zwischen einer ausreichenden Wasserundurchlässigkeit, verbunden mit einer starken Empfindlichkeit gegenüber UV-Strahlung, oder einer erhöhten Alterungsbeständigkeit, die jedoch mit einem vergleichsweise geringen Widerstand gegen Wasserdurchgang einhergeht.

Aufgabe der vorliegenden Erfindung ist es, eine Unterdachbahn der eingangs genannten Art zur Verfügung zu stellen, wobei bei einer einfachen bzw. ressourcensparenden Herstellung eine effektive bewitterungsseitige Schutzfunktion gegenüber einfallender UV-Strahlung ermöglicht wird.

Bei der erfindungsgemäßen Unterdachbahn wird die vorgenannte Aufgabe dadurch gelöst, dass neben wenigstens einer Trägerschicht und wenigstens einer Funktionsschicht, die für eine hohe Wasserdichtigkeit sorgt, wenigstens eine Schutzschicht zum Schutz vor UV-Strahlung als weitere Schicht vorgesehen ist. Erfindungsgemäß ist als außenliegende Schicht auf der Bewitterungsseite eine Schutzschicht zum Schutz der weiteren Schichten der Unterdachbahn für UV-Strahlung vorgesehen. Die Schutzschicht weist einen offenporigen Schaum auf oder besteht aus einem offenporigen Schaum.

Die Schutzschicht der erfindungsgemäßen Unterdachbahn liegt als offenporiger Schaum vor oder weist einen solchen auf. Im Gegensatz zu einem geschlossenzelligen Schaum lässt die dreidimensionale, netzartige Struktur eines solchen offenporigen Schaums ein Hindurchströmen von Wasserdampf in hohem Maße zu. Gleichzeitig unterbinden die aufgrund seiner Struktur in dem offenporigen Schaum vorhandenen gewundenen Gänge den geradlinigen Durchtritt von UV-Strahlen. Hierdurch ergibt sich ein sehr wirksamer Schutz vor UV-Strahlen.

Bei einer Unterdachbahn lassen sich im verlegten Zustand eine nach außen gewandte Bewitterungsseite sowie eine zur Dachkonstruktion gewandte Innenseite definieren. Da die UV-Strahlung des einfallenden Sonnenlichts größtenteils von außen auf die Unterdachbahn einwirkt, ist erfindungsgemäß die Schutzschicht als äußere bzw. außenliegende Schicht des Schichtenverbundes der Unterdachbahn vorzugsweise auf der Bewitterungsseite vorgesehen, um die weiteren Schichten der Unterdachbahn vor der UV-Strahlung zu schützen.

Je nach Beschaffenheit der Dachkonstruktion und der jeweiligen Einbausituation besteht die Möglichkeit, dass auch von der Innenseite UV-Strahlung zur Unterdachbahn vordringt. Dies kann beispielsweise durch Ausschnitte für Dachfenster oder dergleichen erfolgen. Hieraus kann sich auch eine lokale Schädigung der Unterdachbahn an den von der Innenseite her der UV-Strahlung ausgesetzten Stellen ergeben. Um diesem Problem zu begegnen, hat es sich als vorteilhaft erwiesen, bei einer erfindungsgemäßen Unterdachbahn eine Schutzschicht an der Innenseitie aufzubringen.

Da in aller Regel der wesentliche Teil der einwirkenden UV-Strahlung von außen, d.h. von der Bewitterungsseite her, auf die Unterdachbahn einwirkt, ist eine innenseitige Schutzschicht vorzugsweise als zusätzliche Schicht, insbesondere ergänzend zu einer vorhandenen Schutzschicht auf der Bewitterungsseite der Unterdachbahn, vorgesehen.

Die Ausgestaltung des unter der Schutzschicht angeordneten und der Innenseite zugewandten Schichtenverbundes ist variabel und richtet sich nach dem angestrebten Einsatzzweck. Dies gilt insbesondere für die Anzahl und die relative Anordnung der Schichten zueinander.

Es versteht sich, dass neben der Trägerschicht und der Funktionsschicht auch die Schutzschicht wasserdampfdurchlässig sein muss, um eine Wasserdampfdurchlässigkeit der erfindungsgemäßen Unterdachbahn insgesamt zu gewährleisten.

Als bauphysikallsches Maß für den Widerstand, den eine Bauteilschicht der Wasserdampfdiffusion entgegenstellt, dient die wasserdampfdiffusionsäquivalente Luftschichtdicke (Sd-Wert), die die Dicke einer ruhenden Luftschicht angibt, die im stationären Zustand und unter denselben Randbedingungen von demselben Wasserdampfdiffusionsstrom durchströmt wird wie die betreffende Bauteilschicht.

Bei einer erfindungsgemäßen Unterdachbahn ist die Schutzschicht und/oder die Funktionsschicht derart ausgebildet, dass ihr Sd-Wert jeweils höchstens 2 m beträgt. In einer bevorzugten Ausführungsform beträgt der Sd-Wert dieser Schichten jeweils höchstens 1 m, vorzugsweise jeweils höchstens 0,5 m, bevorzugt jeweils höchstens 0,3 m, weiter bevorzugt jeweils höchstens 0,2 m, weiter bevorzugt jeweils höchstens 0,1 m, weiter bevorzugt jeweils höchstens 0,05 m, wobei ein Sd-Wert zwischen 0,04 m und 0,01 m besonders bevorzugt ist.

Vorzugsweise weist dabei die Schutzschicht eine größere Dampfdurchlässigkeit als die Funktionsschicht auf, um den für die Unterdachbahn vorgesehenen und von der Funktionsschicht realisierten Sd-Wert nicht zu beeinträchtigen.

Es hat sich hierbei im Zusammenhang mit der vorliegenden Erfindung als vorteilhaft erwiesen, dass das Verhältnis des Sd-Wertes der Funktionsschicht zum Sd-Wert der Schutzschicht vorzugsweise größer oder gleich 2:1, bevorzugt größer oder gleich 5:1, weiter bevorzugt größer oder gleich 10:1, weiter bevorzugt größer oder gleich 20:1, weiter bevorzugt größer oder gleich 30:1, besonders bevorzugt größer oder gleich 40:1, insbesondere größer oder gleich 50:1, beträgt.

Da die Wasserdichtigkeit der Unterdachbahn bereits durch die Funktionsschicht gewährleistet wird, ist es erfindungsgemäß ausreichend, wenn die Schutzschicht sowohl wasserdampf- als auch wasserdurchlässig ausgebildet ist, solange eine ausreichende Lichtabschirmung der unteren Schichten durch die Schutzschicht gewährleistet ist. Dabei ist es allerdings unabdingbar, dass etwaiges, in die Schutzschicht eindringendes Wasser das Durchströmen von Wasserdampf durch die Schutzschicht nicht oder nur unwesentlich beeinträchtigt.

In einer besonders bevorzugten Ausführungsform ist bereits die Schutzschicht als wasserdichte Schicht ausgebildet und trägt somit ebenso wie die Funktionsschicht zum Schutz der Dachkonstruktion vor dem Eindringen von Nässe und Verschmutzung bei.

Als Material zur Ausbildung der Schutzschicht kommen bevorzugt Acrylatverbindungen oder Kunststoffdispersionen in Frage, wobei letztere insbesondere auf Acrylat-, Polyurethan- und/oder TPU-Verbindungen basieren können. Grundsätzlich ist jedoch auch jede Kunststoffmasse, die als Schaumbeschichtung appliziert werden kann, als Ausgangsmaterial für eine Schutzschicht im Sinne der Erfindung denkbar.

Zudem ist es möglich, die Schutzschicht mittels Koextrusion oder als Pastenanstrich auf den Verbund der übrigen Schichten der erfindungsgemäßen Unterdachbahn aufzubringen.

Zur Unterstützung der abschirmenden Wirkung der Schutzschicht gegenüber UV-Strahlung kann ein UV-Absorbermaterial, vorzugsweise in Partikelform, in der Schutzschicht vorgesehen sein. Hierzu sind insbesondere Rußpartikel ein geeignetes Material. Denkbar ist darüber hinaus auch der Einsatz von UV-absorbierenden Pigmenten, anorganischen UV-Absorbern, wie beispielsweise Titandioxid, Eisenoxidpigmenten oder Zinkoxiden, und/oder organischen UV-Absorbern, insbesondere auf Basis von Benzotriazolen, Benzophenonen, Triazinen oder Oxalaniliden.

Von einem ausreichenden UV-Schutz kann ausgegangen werden, wenn die Schutzschicht derart ausgebildet ist, dass wenigstens 50% der Intensität des einfallenden UV-Lichts absorbiert werden und dementsprechend nicht auf die innenliegenden Schichten der Unterdachbahn einwirken. Vorzugsweise beträgt das Absorptionsvermögen der Schutzschicht im UV-Bereich wenigstens 75%. In einer besonders bevorzugten Ausführungsform werden wenigstens 95% der Intensität des einfallenden UV-Lichts durch die Schutzschicht am Auftreffen auf die darunterliegenden Schichten gehindert bzw. absorbiert.

Während es grundsätzlich denkbar ist, dass die Schutzschicht zwar einen ausreichenden UV-Schutz der darunterliegenden Schichten bietet, selbst jedoch einer gewissen Alterung im Zuge der UV-Strahlenexposition unterliegt, besteht die Schutzschicht vorzugsweise aus einem UV-beständigen Material oder weist zumindest ein UV-beständiges Material auf, das ein Auftreten von Alterungserscheinungen der Schutzschicht verhindert oder eingeschränkt.

Um die Stabilität und/oder die Beständigkeit der Schutzschicht gegenüber mechanischen, chemischen und/oder physikalischen Umweltfaktoren zu erhöhen oder um ihr zusätzliche, einsatzzweckgebundene Eigenschaften zu verleihen, können in der Schutzschicht funktionale Additive vorgesehen sein. Bei diesen kann es sich insbesondere um UV-Stabilisatoren, Antioxidantien und/oder Stabilisatoren handeln.

Die flächenbezogene Masse ("Grammatur") der Schutzschicht bei einer erfindungsgemäßen Unterdachbahn kann zwischen 4 und 1500 g/m², vorzugsweise zwischen 20 und 200 g/m², besonders bevorzugt zwischen 40 und 120 g/m², liegen. Die vorgenannten Werte für die flächenbezogene Masse gelten unabhängig von der Art und Weise des Auftrags der Schutzschicht auf den weiteren Schichtenverbund der Unterdachbahn.

Die hohe Wasserdichtigkeit der erfindungsgemäßen Unterdachbahn wird in erster Linie durch die Funktionsschicht erzielt. Eine Funktionsschicht auf Basis von TPU hat typischerweise eine Wasserundurchlässigkeit nach DIN EN 20811 von mehr als 10.000 mm Wassersäule (mmWS). Eine Funktionsschicht auf Basis einer mikroporösen Folie weist üblicherweise eine Wasserdichtigkeit von mehr als 5000 mmWS auf.

Wie bereits erwähnt, ist es jedoch vorteilhaft, wenn die Schutzschicht durch eine eigene Wasserundurchlässigkeit zur Gesamtschutzleistung der Unterdachbahn beiträgt. Vorzugsweise weist die Schutzschicht dabei eine Wasserdichtigkeit von wenigstens 100 mmWS, bevorzugt wenigstens 200 mmWS, weiter bevorzugt wenigstens 1000 mmWS und besonders bevorzugt wenigstens 5000 mmWS auf. Dieser Wert entspricht der Definition für einen hohen Widerstand gegen Wasserdurchgang gemäß DIN EN 20811 bei einer Steiggeschwindigkeit des Wasserdrucks von 60 ± 3 cmWS/min.

Vorteilhafterweise ist die Schutzschicht hinreichend abriebfest ausgebildet, so dass die Wasserdichtigkeit der Schutzschicht auch nach einer mechanischen Belastung zumindest in einem ausreichenden Maß erhalten bleibt.

Die Abriebfestigkeit wird nach DIN CERTCO "Zertifizierungsprogramm für Unterdachbahnen nach DIN EN 13859-1" bzw. DIN EN ISO 12947-2 ermittelt. Hinreichende Abriebfestigkeit liegt vor, wenn die Wasserdichtigkeit gemäß DIN EN 20811 eines Prüflings nach einer Scheuerbelastung in einem Martindale-Gerät noch wenigstens 1500 mmWS bei einer Wasserdrucksteigerung von 60 ± 3·cmWS/min beträgt.

Von außen einwirkende Umweltfaktoren wie Temperaturschwankungen, Feuchtigkeit und einfallendes Sonnenlicht können die mechanische Widerstandsfähigkeit einer Bauteilschicht stark beeinträchtigen. Hinsichtlich einer guten Haltbarkeit der erfindungsgemäßen Unterdachbahn wird daher eine geringe Empfindlichkeit der Schutzschicht gegenüber solchen Umweltfaktoren angestrebt. Zur Überprüfung dieser Eigenschaft wird die betreffende Schicht im Rahmen eines Schnellbewitterungstests den in Frage kommenden Umweltfaktoren ausgesetzt. Dabei wird das mehrjährige Einwirken dieser Faktoren auf die betreffende Schicht in einem verkürzten Zeitraum simuliert. Anschließend wird die Reißdehnung der Schicht gemessen. Bei der Funktionsschicht einer erfindungsgemäßen Unterdachbahn beträgt die Reißdehnung nach einer Freibewitterung von acht Wochen insbesondere unter "Florida-Bedingungen" noch wenigstens 80% des Ausgangswertes. Dies gilt ebenso für die Reißdehnung nach einer Schnellbewitterung durch UV-Strahlungsbelastung mit einem QUV-Gerät in Anlehnung an DIN EN 13859 mit einer kontinuierlichen Bestrahlung mit UV-Licht über einen Zeitraum von 672 Stunden (vier Wochen), das heißt doppelt so lang wie nach DIN EN 13859 vorgesehen ist.

Unter der Bezeichnung "Florida-Bewitterung" wird ein standardisiertes Verfahren der Firma Q-Lab zur Freibewitterung verstanden. Hierbei werden zu untersuchende Prüflinge in einer Außenbewitterungsanlage im Süden des US-Bundesstaates Florida den dort vorherrschenden klimatischen Bedingungen ausgesetzt. Aufgrund der hohen jährlichen UV-Belastung in Verbindung mit sehr hoher Luftfeuchtigkeit kann hier beispielsweise eine einjährige Exposition des Prüflings gegenüber äußeren Umweltfaktoren einer mehrjährigen Bewitterung an anderen Orten entsprechen. Die Tests erfolgen dabei nach der Methode ASTM G7 2011. Bei den im Zusammenhang mit der vorliegenden Erfindung geprüften Mustern handelt es sich um Prüflinge mit den Abmessungen von 30 cm in der Länge und 15 cm in der Breite. Die Prüfling wurden in einem Rahmen in einem Winkel von 45° nach Süden ausgerichtet und direkt der Bewitterung ausgesetzt.

Grundsätzlich ist die Ausgestaltung der innenliegenden, d. h. im verlegten Zustand der Dachkonstruktion zugewandten, Schichten unabhängig von der Beschaffenheit der Schutzschicht. Dies betrifft insbesondere die Materialauswahl. So kann die Funktionsschicht beispielsweise als mikroporöse Folie ausgebildet sein und/oder eine TPU-Verbindung aufweisen.

Die Funktionsschicht wird in ihren Eigenschaften derart ausgebildet, dass sie neben einer hohen Wasserdampfdurchlässigkeit mit einem Sd-Wert von höchstens 2 m, vorzugsweise höchstens 1 m, bevorzugt höchstens 0,5 m, weiter bevorzugt höchstens 0,3 m, weiter bevorzugt höchstens 0,2 m, weiter bevorzugt höchstens 0,1 m, insbesondere höchstens 0,05 m, besonders bevorzugt zwischen 0,04 m und 0,01 m, auch eine hinreichende Wasserdichtigkeit aufweist. Eine ausreichende Wasserdichtigkeit bestimmt nach DIN EN 20811 ist bei einem Wert von wenigstens 1000 mmWS gegeben. Bei einer besonders bevorzugten Ausführungsform beträgt die Wasserdichtigkeit der Funktionsschicht wenigstens 5000 mmWS.

Der wesentliche Anteil zur mechanischen Belastbarkeit einer erfindungsgemäßen Unterdachbahn wird durch die Trägerschicht beigetragen. Es handelt sich hierbei in der Regel um einen thermisch und/oder chemisch verfestigten und/oder mittels Nadeln, Wasserstrahlen und/oder Luftstrahlen verfestigten Vliesstoff, der Filament- und/oder Stapelfasern aufweisen kann. Zudem kann die Trägerschicht auch zusätzlich, beispielsweise durch ein Gewebe, verstärkt werden oder es können mehrere Trägerschichten kombiniert werden, um die mechanische Belastbarkeit der erfindungsgemäßen Unterdachbahn weiter zu erhöhen.

Als Ausgangsmaterial für das Vlies der Trägerschicht kommen bevorzugt Polypropylen (PP), Polyethylenterephthalat (PET) oder eine PP-/PET-Mischung in Frage.

Eine hinreichende mechanische Stabilität der Trägerschicht bei einer erfindungsgemäßen Unterdachbahn bzw. der Unterdachbahn insgesamt ist dann gewährleistet, wenn die Zugfestigkeit der Trägerschicht bzw. der Unterdachbahn in Längsrichtung gemäß DIN EN 13859 wenigstens 200 N/5cm, vorzugsweise wenigstens 250 N/5cm, besonders bevorzugt wenigstens 450 N/5cm, beträgt.

In Querrichtung beträgt eine ausreichende Zugfestigkeit der Trägerschicht bzw. der Unterdachbahn wenigstens 150 N/5cm, vorzugsweise bevorzugt wenigstens 200 N/5cm, bevorzugt wenigstens 450 N/5cm, gemäß DIN EN 13859.

Die flächenbezogene Masse der Trägerschicht beträgt bei einer bevorzugten Ausführungsform zwischen 30 und 300 g/m², wobei ein Wert zwischen 70 und 180 g/m² besonders bevorzugt ist. Im Fall einer Unterdachbahn mit mehr als einer Trägerschicht beziehen sich die vorgenannten Werte jeweils auf die Summe der Grammatur der Trägerschichten.

Zur Herstellung einer eine Dachkonstruktion schützenden Deckschicht im Sinne der Erfindung können mindestens zwei erfindungsgemäße Unterdachbahnen thermisch, mittels eines Quellschweißmittels und/oder durch Verkleben miteinander verbunden werden.

Es versteht sich, dass dazu die Schutzschicht und/oder die Funktionsschicht der Bahn thermisch und/oder mittels eines Quellschweißmittels mit der Schutzschicht und/oder der Funktionsschicht einer weiteren Bahn verbindbar sein müssen.

Zur Ausbildung einer flächendeckend abdichtenden Deckschicht müssen sich die einzelnen Bahnen im Randbereich überlappen. Der Überlappungsbereich weist dabei vorzugsweise eine Breite von wenigstens 5 cm auf.

Bei einer bevorzugten Ausführungsform einer Deckschicht aus erfindungsgemäßen Unterdachbahnen, bei der der Fügevorgang mit einem Quellschweißmittel vorgenommen wird, werden mit einem Pinsel 10 ml Quellschweißmittel pro Laufmeter im überlappenden Bereich auf die Unterdeckbahnen aufgebracht. Anschließend wird der überlappende Bereich mit einer Andruckrolle zusammengepresst. Im Ergebnis bildet sich so eine durchgehende, stoffschlüssige Verbindung der Unterdachbahnen aus.

Bei einem durch einen chemischen Fügevorgang hergestellten Ausführungsbeispiel einer Deckschicht wird der überlappende Bereich der Unterdachbahnen mittels eines Heißluftgeräts oder eines Heizspiegels erhitzt und ebenfalls im Anschluss mit einer Andruckrolle zusammengedrückt. Auch hier bildet sich im Ergebnis eine durchgehende, stoffschlüssige Verbindung der Unterdachbahnen aus.

In beiden Fällen erfolgt die Verarbeitung sowie die mindestens 20 Stunden dauernde Lagerung bei einer Temperatur von 23°C und einer relativen Luftfeuchte von 50 ± 5%.

Von einer Zusammenfügbarkeit der Unterdachbahnen und damit von einer ausreichenden mechanischen Festigkeit der erfindungsgemäßen Deckschicht kann ausgegangen werden, wenn der Scherwiderstand der Fügenaht nach DIN EN 12317-2 wenigstens 250 N beträgt.

Die in den vorgenannten Absätzen genannten Merkmale sind absatzweise als solche relevant und können für sich mit dem Grundgedanken der Erfindung und/oder in beliebiger Kombination miteinander zu Anwendung kommen.

Weitere Merkmale, Vorteile und Anwendungsmöglichkeiten der vorliegenden Erfindung ergeben sich aus der nachfolgenden Beschreibung von Ausführungsbeispielen anhand der Zeichnung und der Zeichnung selbst. Dabei bilden alle beschreibenden und/oder bildlich dargestellten Merkmale für sich oder in beliebiger Kombination den Gegenstand der vorliegenden Erfindung, unabhängig von ihrer Zusammenfassung in den Ansprüchen oder deren Rückbeziehung.

Es zeigt
- Fig. 1: eine schematische Schnittdarstellung einer erfindungsgemäßen Unterdachbahn,
- Fig. 2: eine der Fig. 1 entsprechende Darstellung einer weiteren Ausführungsform der Unterdachbahn aus Fig. 1,
- Fig. 3: eine der Fig. 1 entsprechende Darstellung einer weiteren Ausführungsform der Unterdachbahn aus Fig. 1,
- Fig. 4: eine der Fig. 1 entsprechende Darstellung einer weiteren Ausführungsform der Unterdachbahn aus Fig. 1,
- Fig.5: eine der Fig. 1 entsprechende Darstellung einer weiteren Ausführungsform der Unterdachbahn aus Fig. 1 und

- Fig. 6: eine Dachstellung einer Unterdachbahn, die nicht Teil der Erfindung ist.

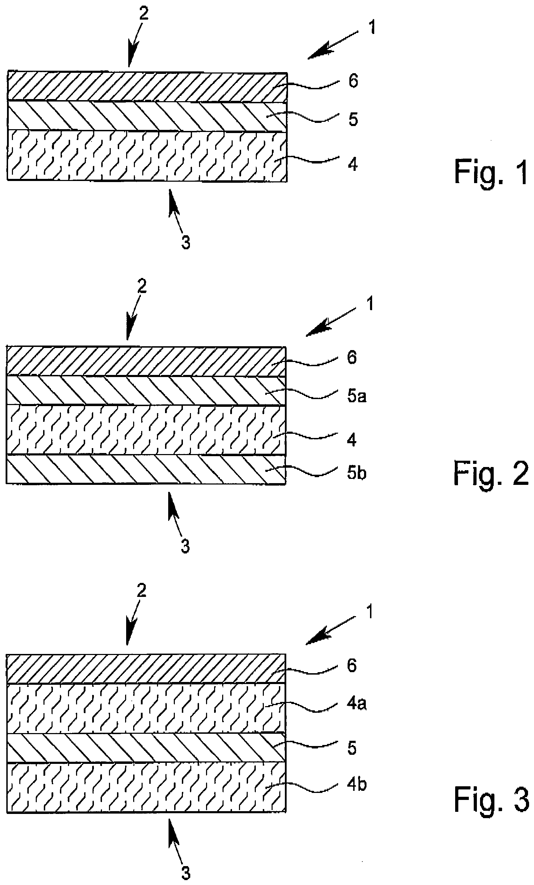

Fig. 1 zeigt eine erfindungsgemäße Unterdachbahn 1 mit einer in vorliegender Darstellung nach oben gerichtetem Bewitterungsseite 2 und einer in vorliegender Darstellung nach unten gerichteten, im verlegten Zustand einer nicht dargestellten Dachkonstruktion zugewandten Innenseite 3.
Die Bewitterungsseite 2 stellt im verlegten Zustand die Grenzfläche dar, über die in der Regel Umweltfaktoren größtenteils auf die Unterdachbahn 1 einwirken.

Die Unterdachbahn 1 ist vorliegend als dreischichtiger Verbund ausgeführt, wobei als unterste, das heißt am weitesten innenliegende Schicht, eine Trägerschicht 4 vorgesehen ist, die für die mechanische Belastbarkeit der Unterdachbahn 1 sorgt. Die Trägerschicht 4 ist dabei als Vlies ausgebildet..Vliesstoffe besitzen in der Regel eine hohe Stabilität gegenüber mechanischer Einwirkung, wie beispielsweise durch Perforation oder Einreißen. Gleichzeitig ist es Wasserdampf möglich, zwischen den Fasern des Vlieses hindurch zu diffundieren.
Auf die Trägerschicht 4 ist ferner eine Funktionsschicht 5 aufgebracht. Diese verleiht der Unterdachbahn 1 letztlich ihre wasser- und schmutzdichten Eigenschaften. Als äußerste Schicht, und damit der Bewitterungsseite 2 zugewandt, ist eine Schutzschicht 6 vorgesehen. Als am weitesten außen angeordnete Schicht schützt die Schutzschicht 6 die weiteren, darunterliegenden Schichten der Unterdachbahn 1 vor äußeren Einflüssen, insbesondere vor UV-Strahlung.

Die in Fig. 2 gezeigte alternative Ausführungsform der Unterdachbahn 1 entspricht in ihrem Aufbau der in Fig. 1 gezeigten Ausführungsform, wobei jedoch zusätzlich zu einer ersten Funktionsschicht 5a an der Innenseite 3 eine weitere Funktionsschicht 5b vorgesehen ist. Die insgesamt zwei Funktionsschichten 5a, 5b sind vorliegend also von der Trägerschicht 4 getrennt. Es ist darüber hinaus jedoch auch denkbar, dass im Fall, dass mehr als eine Funktionsschicht 5 vorgesehen ist, die Funktionsschichten 5 durchaus auch benachbart im Schichtenverbund der Unterdachbahn 1 angeordnet sein können. Es versteht sich, dass im Falle mehrerer Funktionsschichten 5 diese unterschiedliche Eigenschaften aufweisen können.

Bei der in Fig. 3 gezeigten alternativen Ausführungsform der Unterdachbahn 1 ist ebenso wie bei den in den Fig. 1 und 2 gezeigten Ausführungsformen der Unterdachbahn 1 an der Bewitterungsseite 2 eine Schutzschicht 6 vorgesehen. Allerdings weist der darunterliegende Schichtenverbund zwei Trägerschichten 4a, 4b, vorliegend in Form von Vliesstoffschichten, mit einer dazwischenliegenden Funktionsschicht 5 auf. Auf diese Weise wird die Belastbarkeit der Unterdachbahn 1 gegenüber mechanischen Einwirkungen deutlich erhöht. Darüber hinaus ist es beispielsweise möglich, durch mehrere Trägerschichten 4 mit unterschiedlichen Eigenschaften der Unterdachbahn 1 eine erhöhte Steifigkeit zu verleihen.

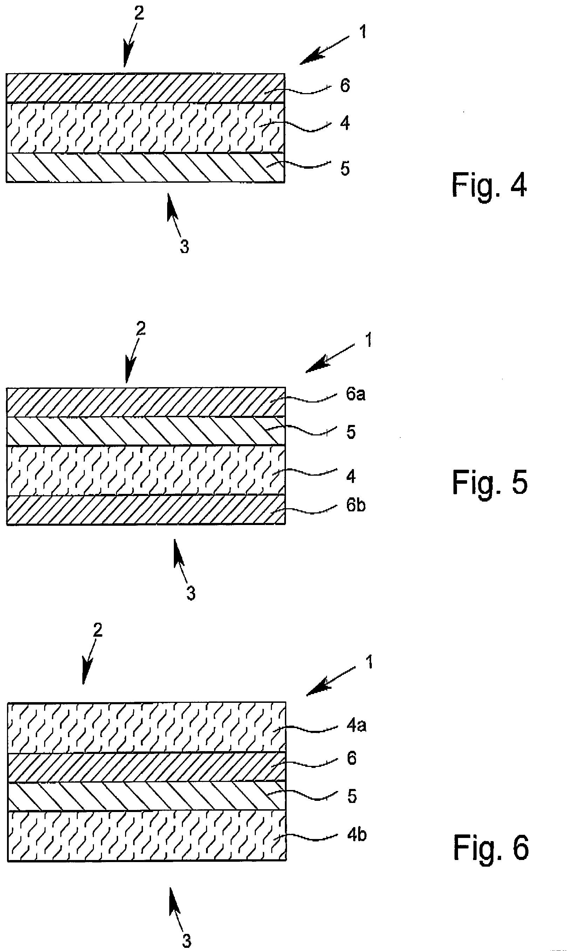

Fig. 4 zeigt eine alternative Ausführungsform der Unterdachbahn 1, bei der wie bei der in Fig. 1 gezeigten Ausführungsform ein dreischichtiger Aufbau vorgesehen ist, mit dem Unterschied, dass die Trägerschicht 4 sich mittig befindet und an der Bewitterungsseite 2 von der Schutzschicht 6 und an der Innenseite 3 von einer Funktionsschicht 5 bedeckt wird. Diese Ausführungsform hat den Vorteil, dass von innen heranströmender Wasserdampf zuerst auf die Funktionsschicht 5 trifft, so dass etwaiges Kondensat an der Innenseite 3 herablaufen kann und sich nicht zwischen den Fasern der Trägerschicht 4 sammelt, wodurch die Wasserdampfdiffusion durch die Trägerschicht 4 beeinträchtigt werden kann. Im Falle der besonders bevorzugten Ausführung der Schutzschicht 6 als wasserundurchlässige Schicht bleibt die Trägerschicht 4 somit zumindest im wesentlichen frei von Wasser in flüssiger Form.

Die in Fig. 5 dargestellte Ausführungsform der Unterdachbahn 1 entspricht vom Schichtenaufbau grundsätzlich der in Fig. 1 dargestellten Ausführungsform. Es ist jedoch zusätzlich zu einer auf der Bewitterungsseite 2 aufgebrachten Schutzschicht 6a eine weitere Schutzschicht 6b an der Innenseite 3 vorgesehen. Dadurch werden die empfindlichen, im vorliegenden Schichtenverbund zwischen den Schutzschichten 6a, 6b liegenden Schichten der Unterdachbahn 1 auch vor UV-Strahlung geschützt, die von der Innenseite 3 her einwirkt, beispielsweise durch Dachfensteröffnungen oder infolge bestimmter baulicher Gegebenheiten.

Es versteht sich, dass die in Fig. 5 dargestellte Ausführungsform der Unterdachbahn 1 nur beispielhaft aufgeführt ist. Es versteht sich, dass erfindungsgemäß auch jeder andere Schichtenaufbau der Unterdachbahn 1 vorgesehen sein kann. Dies betrifft insbesondere die Anzahl und Reihenfolge der Trägerschichten 4 und/oder Funktionsschichten 5 zwischen den Schutzschichten 6a, 6b.

In Fig. 6 ist eine Ausführungsform dargestellt, bei der - wie bei der Ausführungsform gemäß Fig. 3 - zwei Trägerschichten 4a, 4b vorgesehen sind. Auch diese können in Form von Vliesschichten ausgebildet sein. Zwischen den beiden Trägerschichten 4a, 4b, die unter- bzw. oberseitig angeordnet sind, befinden sich zum einen eine Funktionsschicht 5 und im Übrigen eine Schutzschicht 6. Die Reihenfolge der Anordnung der Funktionsschicht 5 und der Schutzschicht 6 ist grundsätzlich beliebig. Kennzeichnend für die Ausführungsform gemäß Fig. 6 ist, dass die Funktionsschicht 5 und die Schutzschicht 6 zwischen den beiden Trägerschichten 4a, 4b sandwichartig angeordnet sind. Diese Ausführungsform ist nicht Teil der Erfindung. Nachfolgend sind einige konkrete Ausführungsbeispiele einer erfindungsgemäßen Unterdachbahn aufgeführt:

### Ausführungsbeispiel 1:

Ein Polyestervlies mit einer Grammatur von 110 g/m², bestehend aus Filamentfasern, wird in einem Extrusionsprozess mit 70 g/m² TPU beschichtet. In einem nachgelagerten Schritt wird eine Mischung aus 88% Kunststoffdispersion Ra 576 H (Basis Acrylat/Methacrylat), 3,5% Decotint PCW 125 NB (Schwarz) als UV-Absorber und Farbmittel, 7% 1,2-Bis(pentabromphenyl)ethan als Flammschutz und 1,5% Hostavin 3225-2 dip XP als UV-Stabilisator und UV-Absorber in einer Schlagschaummaschine mit Pressluft aufgeschäumt und auf die TPU-Schicht des Zwischenproduktes aufgerakelt. Die Grammatur der Acrylat-Schutzschicht beträgt nach Trocknung bei 150 °C 90 g/m².

Der Widerstand des Zwischenproduktes mit TPU-Schicht, jedoch ohne die Acrylat-Schutzschicht, gegen das Durchdringen von Wasser nach DIN EN 20811 bei einer Steiggeschwindigkeit des Wasserdrucks von 60 ± 3 cm Wassersäule pro Minute (cmWS/min) beträgt mehr als 10.000 mmWS.

Der Widerstand des Endproduktes mit TPU-Schicht und Acrylat-Schutzschicht gegen das Durchdringen von Wasser nach DIN EN 20811 bei einer Steiggeschwindigkeit des Wasserdrucks von 60 ± 3 cmWS/min beträgt mehr als 10.000 mmWS.

Der Sd-Wert des Zwischenproduktes mit TPU-Schicht, jedoch ohne die Acrylat-Schutzschicht, beträgt 0,17 m bestimmt nach DIN EN 13859-1.

Der Sd-Wert des Endproduktes mit TPU-Schicht und Acrylat-Schutzschicht beträgt 0,19 m bestimmt nach DIN EN 13859-1.

Zur Bestimmung der Abriebfestigkeit werden gemäß DIN CERTCO "Zertifizierungsprogramm für Unterdeckbahnen nach DIN EN 13859-1" Punkt 4.10 die Prüflinge in einen Martindale-Prüfgerät mit jeweils 500 Scheuertouren bei einem Druck von 12 kPa belastet.

Nach der Belastung im Martindale-Prüfgerät beträgt der Widerstand des Zwischenproduktes mit TPU-Schicht, jedoch ohne die Acrylat-Schutzschicht, gegen das Durchdringen von Wasser nach DIN EN 20811 135 mmWS.

Nach der Belastung im Martindale-Prüfgerät beträgt der Widerstand des Endproduktes mit TPU-Schicht und Acrylat-Schutzschicht gegen das Durchdringen von Wasser nach DIN EN 20811 mehr als 10.000 mmWS.

Zur Bestimmung der UV-Beständigkeit wird das Endprodukt mit Acrylat-Schutzschicht nach DIN EN 13859 vier Wochen lang kontinuierlich UV-Strahlung ausgesetzt.

Im Anschluss an die UV-Belastung wird die Reißdehnung der Funktionsschicht ermittelt.

Beim Endproduktes mit Acrylat-Schutzschicht beträgt die Reißdehnung 92% des Ausgangswertes vor der UV-Belastung.

Zur Bestimmung der Alterungsbeständigkeit wird das Endprodukt mit Acrylat-Schutzschicht acht Wochen lang der Freibewitterung unter "Florida-Bedingungen" ausgesetzt. Die Schutzschicht wird der Sonne entgegen, in einem 45°-Winkel nach Süden ausgerichtet.

Im Anschluss an die Freibewitterung wird die Reißdehnung der TPU-Funktionsschicht ermittelt. Die Reißdehnung der TPU-Funktionsschicht beträgt nach acht Wochen Freibewitterung unter den vorgenannten Bedingungen 84,5% des Ausgangswertes vor der Freibewitterung.

### Ausführungsbeispiel 2:

Als Ausgangsmaterial dient eine dreischichtige Bahn, bestehend aus einer unterseitigen TPU-Schicht mit einer Grammatur von 100 g/m², einem in der Mitte befindlichen Stapelfaser-Polyestervlies mit einer Grammtur von 150 g/m² und einer oberseitigen TPU-Schicht mit einer Grammatur von 100 g/m².

Eine Mischung aus 88% Kunststoffdispersion Ra 576 H (Basis Acrylat/Methacrylat), 3,5% Decotint PCW 125 NB (Schwarz) als UV-Absorber und Farbmittel, 7% 1,2-Bis(pentabromphenyl)ethan als Flammschutz und 1,5% Hostavin 3225-2 dip XP als UV-Stabilisator wird in einer Schlagschaummaschine mit Pressluft aufgeschäumt und auf die obere TPU-Schicht der dreischichtigen Bahn aufgerakelt. Die Grammatur der Acrylat-Schutzschicht beträgt nach Trocknung bei 150 °C 100 g/m².

Der Sd-Wert der dreischichtigen Bahn ohne die Acrylat-Schutzschicht beträgt 0,30 m bestimmt nach DIN EN 13859-1.

Der Sd-Wert des Endproduktes mit Acrylat-Schutzschicht beträgt 0,33 m bestimmt nach DIN EN 13859-1.

Der Widerstand der Bahn ohne die Acrylat-Schutzschicht gegen das Durchdringen von Wasser nach DIN EN 20811 bei einer Steiggeschwindigkeit des Wasserdrucks von 60 ± 3 cmWS/min beträgt mehr als 10.000 mmWS.

Der Widerstand der Bahn mit Acrylat-Schutzschicht gegen das Durchdringen von Wasser nach DIN EN 20811 bei einer Steiggeschwindigkeit des Wasserdrucks von 60 ± 3 cmWS/min beträgt mehr als 10.000 mmWS.

Zur Bestimmung der Alterungsbeständigkeit wird das Endprodukt mit Acrylat-Schutzschicht acht Wochen lang der Freibewitterung unter "Florida-Bedingungen" ausgesetzt. Die Schutzschicht wird der Sonne entgegen, in einem 45°-Winkel nach Süden ausgerichtet.

Im Anschluss an die Freibewitterung wird die Reißdehnung der TPU-Funktionsschicht ermittelt. Die Reißdehnung der TPU-Funktionsschicht beträgt nach acht Wochen Freibewitterung unter den vorgenannten Bedingungen 93% des Ausgangswertes vor der Freibewitterung.

### Ausführungsbeispiel 3:

Als Ausgangsmaterial dient eine dreischichtige Bahn, bestehend aus einem unterseitigen, thermisch kalandrierten PP-Vlies mit einer Grammatur von 30 g/m², einer wasserdichten, wasserdampfdurchlässigen mikroporösen Folie bestehend aus PP und Kreide mit einer Grammatur von 42 g/m² und einem oberseitigen thermisch kalandrierten PP-Vlies mit einer Grammatur von 70 g/m².

Eine Mischung aus 88% Kunststoffdispersion Ra 576 H (Basis Acrylat/Methacrylat), 5% Decotint PCW 125 NB (Schwarz) als UV-Absorber und Farbmittel und 7% 1,2-Bis(pentabromphenyl)ethan als Flammschutz wird in einer Schlagschaummaschine mit Pressluft aufgeschäumt und auf diejenige Seite der dreischichtigen Bahn aufgerakelt, auf der sich das PP-Vlies mit 90 g/m² befindet. Die Grammatur der Acrylat-Schutzschicht beträgt nach Trocknung bei 150 °C 60 g/m².

Der Widerstand gegen das Durchdringen von Wasser nach DIN EN 20811 bei einer Steiggeschwindigkeit des Wasserdrucks von 60 ± 3 cmWS/min beträgt 5.480 mmWS.

Zur Bestimmung der UV-Beständigkeit wird das Endprodukt mit Acrylat-Schutzschicht nach DIN EN 13859 vier Wochen lang kontinuierlich UV-Strahlung ausgesetzt.

Im Anschluss an die UV-Belastung wird die Reißdehnung der Funktionsschicht ermittelt. Die Reißdehnung beträgt 102% des Ausgangswertes vor der UV-Belastung.

### Ausführungsbeispiel 4:

Eine Mischung aus 88% Kunststoffdispersion Ra 576 H (Basis Acrylat/Methacrylat), 5% Decotint PCW 125 NB (Schwarz) als UV-Absorber und Farbmittel und 7% Vestolit P1415 K80 als Flammschutz wird in einer Schlagschaummaschine mit Pressluft aufgeschäumt und auf ein Polyestervlies mit einer Grammatur von 150 g/m², bestehend aus Stapelfasern, aufgerakelt. Die Grammatur der Acrylat-Schutzschicht beträgt nach Trocknung bei 150 °C 120 g/m². Im Anschluss wird die der Acrylat-Schutzschicht gegenüberliegende Seite des Vlieses in einem Extrusionsprozess mit TPU mit einer Grammatur von 100 g/m² beschichtet.

Der Widerstand des Zwischenproduktes mit Acrylat-Schutzschicht, jedoch ohne die TPU Schicht, gegen das Durchdringen von Wasser nach DIN EN 20811 bei einer Steiggeschwindigkeit des Wasserdrucks von 60 ± 3 cmWS/min beträgt 598 mmWS.

Der Widerstand des Endproduktes mit Acrylat-Schutzschicht und TPU-Schicht gegen das Durchdringen von Wasser nach DIN EN 20811 bei einer Steiggeschwindigkeit des Wasserdrucks von 60 ± 3 cmWS/min beträgt mehr als 10.000 mmWS.

Der Sd-Wert des Zwischenproduktes mit Acrylat-Schutzschicht, jedoch ohne die TPU-Schicht, beträgt 0,02 m bestimmt nach DIN EN 13859-1.

Der Sd-Wert des Endproduktes mit TPU-Schicht und Acrylat-Schutzschicht beträgt 0,16 m bestimmt nach DIN EN 13859-1.

Zur Überprüfung der Zusammenfügbarkeit mit Quellschweißmittel werden zwei Bahnen des Endproduktes 5 cm überlappt, wobei die Acrylat-Schutzschicht jeweils nach oben zeigt.

Mit einem Pinsel werden ca. 10 ml Quellschweißmittel auf Basis von Tetrahydrofuran pro Laufmeter in den überlappenden Bereich eingebracht und anschließend der überlappende Bereich mit einer Andruckrolle zusammengedrückt.

Die Verarbeitung und anschließende Lagerung erfolgt dabei bei einer Temperatur von 23 °C und einer relativen Luftfeuchte von (50 ± 5)%.

Die Festigkeit der Fügenähte nach DIN EN 12317-2 beträgt 345 N.

Zur Überprüfung der thermischen Zusammenfügbarkeit werden zwei Bahnen des Endproduktes 5 cm überlappt, wobei die Acrylat-Schutzschicht jeweils nach oben zeigt. In den überlappenden Bereich wird mit einem Heißluftgerät heiße Luft mit einer Temperatur von 270 °C eingebracht und der überlappende Bereich mit einer Andruckrolle zusammengedrückt.

Die Verarbeitung und anschließende Lagerung erfolgt dabei bei einer Temperatur von 23 °C und einer relativen Luftfeuchte von (50 ± 5)%.

Die Festigkeit der Fügenähte nach DIN EN 12317-2 beträgt 331 N.

Zur Bestimmung Alterungsbeständigkeit wird das Endprodukt acht Wochen lang der Freibewitterung unter "Florida-Bedingungen" ausgesetzt. Die Schutzschicht wird der Sonne entgegen, in einem 45°-Winkel nach Süden ausgerichtet.

Im Anschluss an die Freibewitterung wurde die Reißdehnung der TPU-Funktionsschicht ermittelt. Die Reißdehnung der TPU-Funktionsschicht beträgt nach acht Wochen Freibewitterung unter den vorgenannten Bedingungen 102% des Ausgangswertes vor der Freibewitterung.

### Ausführungsbeispiel 5:

Ein Polyestervlies mit einer Grammatur von 110 g/m², bestehend aus Filamentfasern, wird in einem Extrusionsprozess mit 70 g/m² TPU beschichtet. In einem nachgelagerten Schritt wird eine Mischung aus 85,5% Kunststoffdispersion Emuldur DS 2360 (Basis Polyurethan) der Firma BASF, 5% Decotint PCW 125 NB (Schwarz) als UV-Absorber und Farbmittel, 7% 1,2-Bis(pentabromphenyl)ethan als Flammschutz und 2,5% Tinuvin 5333-DW als UV-Absorber und UV-Stabilisator auf die TPU-Schicht des Zwischenproduktes aufgerakelt. Die Grammatur der aufgerakelten Polyurethan-Schutzschicht beträgt nach Trocknung bei 110 °C 60 g/m².

Der Widerstand des Zwischenproduktes mit TPU-Schicht, jedoch ohne die Polyurethan-Schutzschicht, gegen das Durchdringen von Wasser nach DIN EN 20811 bei einer Steiggeschwindigkeit des Wasserdrucks von 60 ± 3 cmWS/min beträgt mehr als 10.000 mmWS.

Der Widerstand des Endproduktes mit TPU-Schicht und Polyurethan-Schutzschicht gegen das Durchdringen von Wasser nach DIN EN 20811 bei einer Steiggeschwindigkeit des Wasserdrucks von 60 ± 3 cmWS/min beträgt mehr als 10.000 mmWS.

Der Sd-Wert des Zwischenproduktes mit TPU-Schicht, jedoch ohne die Polyurethan-Schutzschicht, beträgt 0,17 m bestimmt nach DIN EN 13859-1.

Der Sd-Wert des Endproduktes mit TPU-Schicht und Polyurethan-Schutzschicht beträgt 0,25 m bestimmt nach DIN EN 13859-1.

Zur Bestimmung der UV-Beständigkeit wird das Endprodukt mit Polyurethan-Schutzschicht nach DIN EN 13859 vier Wochen lang kontinuierlich UV-Strahlung ausgesetzt.

Im Anschluss an die UV-Belastung wird die Reißdehnung der Funktionsschicht ermittelt. Beim Endprodukt mit Polyurethan-Schutzschicht beträgt die Reißdehnung 98% des Ausgangswertes vor der UV-Belastung.

Die folgenden Ausführungsbeispiele sind nicht Teil der Erfindung:

### Ausführungsbeispiel 6:

Als Ausgangsmaterial dient eine zweischichtige Bahn, bestehend aus einem unterseitigem, thermisch kalandrierten PP-Vlies mit einer Grammatur von 60g/m², einer wasserdichten, wasserdampfdurchlässigen mikroporösen Folie bestehend aus PP und Kreide mit einer Grammatur von 42g/m².

Eine Mischung aus 88% Kunststoffdispersion Ra 576 H (Basis Acrylat/Methacrylat), 5% Decotint PCW 125 NB (Schwarz) als UV-Absorber und Farbmittel und 7% 1,2-Bis(pentabromphenyl)ethan als Flammschutz wird in einer Schlagschaummaschine mit Pressluft aufgeschäumt und auf diejenige Seite der zweischichtigen Bahn aufgerakelt, auf der sich die wasserdichte, wasserdampfdurchlässige mikroporösen Folie bestehend aus PP und Kreide befindet. Auf diese Kunststoffdispersionsbeschichtung wird unmittelbar ein thermisch kalandriertes PP-Vlies mit einer Grammatur von 30g/m² abgelegt und kalandriert. Nach der Trocknung ist das PP-Vlies von 30g/m² über die Kunststoffdispersionsbeschichtung mit dem Ausgangsmaterial fest verbunden. Man erhält einen 4-lagigen Verbund mit einer Grammatur von 220g/m².

### Ausführungsbeispiel 7:

Als Ausgangsmaterial dient eine zweischichtige Bahn, bestehend aus einem unterseitigem, thermisch kalandrierten PP-Vlies mit einer Grammatur von 60g/m², einer wasserdichten, wasserdampfdurchlässigen mikroporösen Folie bestehend aus PP und Kreide mit einer Grammatur von 42g/m².

Eine Mischung aus 88% Kunststoffdispersion Ra 576 H (Basis Acrylat/Methacrylat), 5% Decotint PCW 125 NB (Schwarz) als UV-Absorber und Farbmittel und 7% 1,2-Bis(pentabromphenyl)ethan als Flammschutz wird auf diejenige Seite der zweischichtigen Bahn aufgerakelt, auf der sich die wasserdichte, wasserdampfdurchlässige mikroporösen Folie bestehend aus PP und Kreide befindet. Auf diese Kunststoffdispersionsbeschichtung wird unmittelbar ein thermisch kalandriertes PP-Vlies mit einer Grammatur von 15g/m² abgelegt und kalandriert. Nach der Trocknung ist das PP-Vlies von 30g/m² über die Kunststoffdispersionsbeschichtung mit dem Ausgangsmaterial fest verbunden. Man erhält einen 4-lagigen Verbund mit einer Grammatur von 200g/m².

### Bezugszeichenliste:

- 1: Unterdeckbahn
- 2: Bewitterungsseite
- 3: Innenseite
- 4: Trägerschicht
- 4a: Trägerschicht
- 4b: Trägerschicht
- 5: Funktionssicht
- 5a: Funktionsschicht
- 5b: Funktionsschicht
- 6: Schutzschicht
- 6a: Schutzschicht
- 6b: Schutzschicht

## Patentansprüche

1. Unterdachbahn (1), mit einer im verlegten Zustand nach außen gewandten Bewitterungsseite (2) und einer im verlegten Zustand nach innen gewandten Innenseite (3), mit mindestens einer wasserdampfdurchlässigen Trägerschicht (4) und mindestens einer mit der Trägerschicht (4) verbundenen, wasserundurchlässigen, wasserdampfdurchlässigen Funktionsschicht (5),
**dadurch gekennzeichnet,**
**dass** als außenliegende Schicht auf der Bewitterungsseite (2) eine Schutzschicht (6) zum Schutz der weiteren Schichten der Unterdachbahn (1) vor UV-Strahlung vorgesehen ist und dass die Schutzschicht (6) einen offenporigen Schaum aufweist oder aus einem offenporigen Schaum besteht.

2. Unterdachbahn nach Anspruch 1, **dadurch gekennzeichnet, dass** die Schutzschicht (6) wasserdampfdurchlässig ist und/oder dass die Schutzschicht (6) eine größere Dampfdurchlässigkeit als die Funktionsschicht (5) aufweist.

3. Unterdachbahn nach Anspruch 1 oder 2, **dadurch gekennzeichnet, dass** der Sd-Wert der Schutzschicht (6) und/oder der Funktionsschicht (5) höchstens 2 m, vorzugsweise höchstens 1 m, bevorzugt höchstens 0,5 m, weiter bevorzugt höchstens 0,3 m, weiter bevorzugt höchstens 0,2 m, weiter bevorzugt höchstens 0,1 m, insbesondere höchstens 0,05 m, besonders bevorzugt zwischen 0,04 m und 0,01 m, beträgt.

4. Unterdachbahn nach einem der vorhergehenden Ansprüche, **dadurch gekennzeichnet, dass** die Schutzschicht (6) eine Acrylatverbindung oder eine Kunststoffdispersion, insbesondere auf Basis von Acrylat-, Polyurethan- und/oder TPU-Verbindungen, aufweist.

5. Unterdachbahn nach einem der vorhergehenden Ansprüche, **dadurch gekennzeichnet, dass** die Schutzschicht (6) ein UV-Absorbermaterial, vorzugsweise in Partikelform, insbesondere Ruß, UV-absorbierende Pigmente, organische und/oder anorganische UV-Absorber, aufweist und/oder dass die Schutzschicht (6) derart ausgebildet ist, dass wenigstens 50%, vorzugsweise wenigstens 75%, bevorzugt wenigstens 95%, der Intensität des einfallenden UV-Lichts absorbiert werden.

6. Unterdachbahn nach einem der vorhergehenden Ansprüche, **dadurch gekennzeichnet, dass** die Schutzschicht (6) ein UV-beständiges Material aufweist oder aus einem UV-beständigen Material besteht und/oder die Schutzschicht (6) funktionale Additive, insbesondere UV-Stabilisatoren, Antioxidantien und/oder Stabilisatoren, enthält.

7. Unterdachbahn nach einem der vorhergehenden Ansprüche, **dadurch gekennzeichnet, dass** die Schutzschicht (6) mittels Koextrusion oder als Pastenanstrich aufgebracht ist und/oder dass die flächenbezogene Masse der Schutzschicht (6) zwischen 4 und 1500 g/m², vorzugsweise zwischen 20 und 150 g/m², bevorzugt zwischen 40 und 120 g/m², beträgt.

8. Unterdachbahn nach einem der vorhergehenden Ansprüche, **dadurch gekennzeichnet, dass** die Schutzschicht (6) wasserundurchlässig ist und/oder dass die Schutzschicht (6) eine Wasserdichtigkeit von wenigstens 100 mmWS, vorzugsweise wenigstens 200 mmWS, bevorzugt wenigstens 1000 mmWS, besonders bevorzugt wenigstens 5000 mmWS, aufweist.

9. Unterdachbahn nach einem der vorhergehenden Ansprüche, **dadurch gekennzeichnet, dass** die Schutzschicht (6) derart ausgebildet ist, dass die Wasserdichtigkeit näch einer Scheuerbelastung gemäß DIN EN 20811 bei einer Wasserdrucksteigerung von 60 ± 3 cmWS/min wenigstens 1500 mmWS beträgt.

10. Unterdachbahn nach einem der vorhergehenden Ansprüche, **dadurch gekennzeichnet, dass** die Schutzschicht (6) derart ausgebildet ist, dass die Reißdehnung der Funktionsschicht nach einer Bewitterung von acht Wochen, insbesondere unter "Florida-Bedingungen", wenigstens 80% des Ausgangswertes beträgt und/oder dass die Schutzschicht (6) derart ausgebildet ist, dass die Reißdehnung der Funktionsschicht nach vier Wochen einer UV-Strahlungsbelastung gemäß DIN EN 13859 wenigstens 80% des Ausgangswertes beträgt.

11. Unterdachbahn nach einem der vorhergehenden Ansprüche, **dadurch gekennzeichnet, dass** die Funktionsschicht (5) als mikroporöse Folie ausgebildet ist und/oder dass die Funktionsschicht (5) eine TPU-Verbindung aufweist und/oder dass die Funktionsschicht (5) derart ausgebildet ist, dass die Wasserdichtigkeit gemäß DIN EN 20811 wenigstens 1000 mmWS, vorzugsweise wenigstens 5000 mmWS, beträgt.

12. Unterdachbahn nach einem der vorhergehenden Ansprüche, **dadurch gekennzeichnet, dass** die Trägerschicht (4) ein thermisch verfestigtes und/oder mittels Nadeln, Wasserstrahlen und/oder Luftstrahlen verfestigtes Vlies aufweist und/oder dass die Trägerschicht (4) ein PP-Vlies, PET-Vlies oder ein Vlies aus einer PP-/PET-Mischung aufweist.

13. Unterdachbahn nach einem der vorhergehenden Ansprüche, **dadurch gekennzeichnet, dass** die Zugfestigkeit, insbesondere der Trägerschicht (4), in Längsrichtung gemäß DIN EN 13859 wenigstens 200 N/5cm, vorzugsweise wenigstens 200 N/5cm, bevorzugt wenigstens 450 N/5cm, beträgt und/oder dass die Zugfestigkeit, insbesondere der Trägerschicht (4), in Querrichtung gemäß DIN EN 13859 wenigstens 150 N/5cm, vorzugsweise wenigstens 200 N/5cm, bevorzugt wenigstens 450 N/5cm, beträgt.

14. Deckschicht aus mindestens zwei Unterdachbahnen (1) nach einem der vorhergehenden Ansprüche,
**dadurch gekennzeichnet,**
**dass** die Unterdachbahnen (1) thermisch, mittels eines Quellschweißmittels und/oder durch Verkleben miteinander verbunden sind.

15. Deckschicht nach Anspruch 14, **dadurch gekennzeichnet, dass** die Überlappung der Unterdachbahnen (1) wenigstens 5 cm beträgt und/oder dass der Scherwiderstand der Fügenaht nach DIN EN 12317-2 wenigstens 250 N beträgt und/oder dass die Schutzschicht (6) und/oder die Funktionsschicht (5) der Unterdachbahn (1) thermisch,mittels eines Quellschweißmittels und/oder durch Verkleben mit der Schutzschicht (6) und/oder der Funktionsschicht (5) einer weiteren Unterdachbahn (1) verbunden ist.

## Claims

1. A sub-roof web (1), having a weathering side (2) facing outwards in the laid state and an inner side facing inwards in the laid state (3), having at least one water-vapour-permeable support layer (4) and at least one water-impermeable water-vapour-permeable functional layer (5) connected to the support layer (4),
**characterised in that**
as an outer layer on the weathering side (2) a protective layer (6) is provided for protecting the further layers of the sub-roof web (1) against UV radiation, and that the protective layer (6) has an open-pore foam or consists of an open-pore foam.

2. A sub-roof web according to claim 1, **characterised in that** the protective layer (6) is water-vapour-permeable and/or that the protective layer (6) has a greater vapour permeability than the functional layer (5).

3. A sub-roof web according to claim 1 or 2, **characterised in that** the Sd value of the protective layer (6) and/or of the functional layer (5) is at the most 2 m, preferably at the most 1 m, preferably at the most 0.5 m, more preferably at the most 0.3 m, more preferably at the most 0.2 m, more preferably at the most 0.1 m, in particular at the most 0.05 m, particularly preferably between 0.04 m and 0.01 m.

4. A sub-roof web according to any one of the preceding claims, **characterised in that** the protective layer (6) has an acrylate compound or a plastic dispersion, in particular on the basis of acrylate, polyurethane and/or TPU compounds.

5. A sub-roof web according to any one of the proceeding claims, **characterised in that** the protective layer (6) has a UV absorber material, preferably in particle form, in particular carbon black, UV-absorbing pigments, organic and/or inorganic UV absorbers and/or that the protective layer (6) is configured such that at least 50%, preferably at least 75%, preferably at least 95%, of the intensity of the incident UV light is absorbed.

6. A sub-roof web according to any one of the preceding claims, **characterised in that** the protective layer (6) comprises a UV-resistant material or consists of a UV-resistant material and/or the protective layer (6) contains functional additives, in particular UV stabilisers, antioxidants and/or stabilisers.

7. A sub-roof web according to any one of the preceding claims, **characterised in that** the protective layer (6) is applied by means of coextrusion or as a paste paint and/or that the mass per unit area of the protective layer (6) is between 4 and 1500 g/m², preferably between 20 and 150 g/m², preferably between 40 and 120 g/m².

8. A sub-roof web according to any one of the preceding claims, **characterised in that** the protective layer (6) is water-impermeable and/or that the protective layer (6) has a water tightness of at least 100 mmWS, preferably at least 200 mmWS, preferably at least 1000 mmWS, particularly preferably at least 5000 mmWS.

9. A sub-roof web according to any one of the preceding claims, **characterised in that** the protective layer (6) is configured in such a way that the water tightness after a scrub load according to DIN EN 20811 is at least 1500 mmWS at a water pressure increase of 60 ± 3 cmWS/min.

10. A sub-roof web according to any one of the preceding claims, **characterised in that** the protective layer (6) is configured in such a way that the elongation at break of the functional layer after weathering for eight weeks, in particular under 'Florida conditions', is at least 80% of the initial value and/or that the protective layer (6) is configured in such a way that the elongation at break of the functional layer after four weeks of UV radiation exposure according to DIN EN 13859 is at least 80% of the initial value.

11. A sub-roof web according to one of the preceding claims, **characterised in that** the functional layer (5) is configured as a microporous film and/or that the functional layer (5) has a TPU connection and/or that the functional layer (5) is designed in such a manner that the water tightness according to DIN EN 20811 is at least 1000 mmWS, preferably at least 5000 mmWS.

12. A sub-roof web according to any one of the preceding claims, **characterised in that** the support layer (4) comprises a nonwoven fabric which is solidified thermally and/or solidified by means of needles, water jets and/or air jets, and/or that the support layer (4) has a PP nonwoven fabric, a PET nonwoven fabric or a nonwoven fabric made of a PP/PET mixture.

13. A sub-roof web according to any one of the preceding claims, **characterised in that** the tensile strength, in particular of the support layer (4), in the longitudinal direction according to DIN EN 13859 is at least 200 N/5cm, preferably at least 200 N/5cm, preferably at least 450 N/5cm, and/or that the tensile strength, in particular of the support layer (4), in the transverse direction according to DIN EN 13859 is at least 150 N/5cm, preferably at least 200 N/5cm, preferably at least 450 N/5cm.

14. A covering layer consisting of at least two sub-roof webs (1) according to any one of the preceding claims,
**characterised in that**
the sub-roof webs (1) are thermally connected to one another by means of a solvent-welding agent and/or by adhesive bonding.

15. A cover layer according to claim 14, **characterised in that** the overlap of the sub-roof webs (1) is at least 5 cm and/or that the shear resistance of the joint seam according to DIN EN 12317-2 is at least 250 N and/or that the protective layer (6) and/or the functional layer (5) of the sub-roof web (1) is thermally connected by means of a solvent-welding agent and/or by adhesive bonding to the protective layer (6) and/or to the functional layer (5) of a further sub-roof web (1).

## Revendications

1. Sous-couche de toiture (1), avec un côté d'exposition aux intempéries (2) tourné vers l'extérieur dans l'état posé et un côté interne (3) tourné vers l'intérieur dans l'état posé, avec au moins une couche support (4) perméable à la vapeur d'eau et au moins une couche fonctionnelle (5) reliée à la couche support (4), imperméable à l'eau et perméable à la vapeur d'eau,
**caractérisée en ce**
**que**, en guise de couche située à l'extérieur sur le côté d'exposition aux intempéries (2), une couche de protection (6) est disposée pour la protection des autres couches de la sous-couche de toiture (1) contre le rayonnement UV et en ce que la couche de protection (6) présente une mousse à pores ouverts ou est constituée d'une mousse à pores ouverts.

2. Sous-couche de toiture selon la revendication 1, **caractérisée en ce que** la couche de protection (6) est perméable à la vapeur d'eau et/ou **en ce que** la couche de protection (6) présente une perméabilité à la vapeur supérieure à celle de la couche fonctionnelle (5).

3. Sous-couche de toiture selon la revendication 1 ou 2, **caractérisé en ce que** la valeur Sd de la couche de protection (6) et/ou de la couche fonctionnelle (5) est au maximum de 2 m, de préférence au maximum de 1 m, préférablement au maximum de 0,5 m, plus préférablement au maximum de 0,3 m, plus préférablement au maximum de 0,2 m, plus préférablement au maximum de 0,1 m, en particulier au maximum de 0,05 m, de façon particulièrement préférée entre 0,04 m et 0,01 m.

4. Sous-couche de toiture selon une des revendications précédentes, **caractérisée en ce que** la couche de protection (6) présente un composé acrylate ou une dispersion de matière plastique, notamment à base de composés acrylate, polyuréthane et/ou TPU.

5. Sous-couche de toiture selon une des revendications précédentes, **caractérisée en ce que** la couche de protection (6) présente un matériau d'absorption des UV, de préférence sous forme de particules, notamment de la suie, des pigments d'absorption des UV, des un absorbant des UV organique et/ou inorganique et/ou **en ce que** la couche de protection (6) est conçue de sorte qu'au moins 50 %, de préférence au moins 75%, préférablement au moins 95 %, de l'intensité de la lumière UV incidente soient absorbés.

6. Sous-couche de toiture selon une des revendications précédentes, **caractérisée en ce que** la couche de protection (6) présente un matériau résistant aux UV ou est constituée d'un matériau résistant aux UV et/ou la couche de protection (6) contient des additifs fonctionnels, notamment des stabilisateurs aux UV, des antioxydants et/ou des stabilisateurs.

7. Sous-couche de toiture selon une des revendications précédentes, **caractérisée en ce que** la couche de protection (6) est appliquée par le biais d'une co-extrusion ou sous forme de peinture de pâte et/ou **en ce que** la masse surfacique de la couche de protection (6) est comprise entre 4 et 1500 g/m², de préférence entre 20 et 150 g/m², préférablement entre 40 et 120 g/m².

8. Sous-couche de toiture selon une des revendications précédentes, **caractérisée en ce que** la couche de protection (6) est imperméable à l'eau et/ou en ce que la couche de protection (6) présente une étanchéité à l'eau d'au moins 100 mmWS, de préférence au moins 200 mmWS, préférablement au moins 1000 mmWS, de manière particulièrement préférée au moins 5000 mmWS.

9. Sous-couche de toiture selon une des revendications précédentes, **caractérisée en ce que** la couche de protection (6) est conçue de sorte que l'étanchéité à l'eau après une contrainte de frottement conformément à DIN EN 20811 lors d'une augmentation de pression de l'eau de 60 ± 3 cmWS/min est d'au moins 1500 mmWS.

10. Sous-couche de toiture selon une des revendications précédentes, **caractérisée en ce que** la couche de protection (6) est conçue de sorte que l'allongement à la rupture de la couche fonctionnelle après une exposition aux intempéries de huit semaines, notamment dans des « conditions de la Floride », représente au moins 80 % de la valeur initiale et/ou **en ce que** la couche de protection (6) est conçue de sorte que l'allongement à la rupture de la couche fonctionnelle après quatre semaine de contrainte de rayonnement UV conformément à DIN EN 13859 représente au moins 80 % de la valeur initiale.

11. Sous-couche de toiture selon une des revendications précédentes, **caractérisée en ce que** la couche fonctionnelle (5) est conçue comme une pellicule microporeuse et/ou **en ce que** la couche fonctionnelle (5) présente un composé de TPU et/ou **en ce que** la couche fonctionnelle (5) est conçue de sorte que l'étanchéité à l'eau conformément à DIN EN 20811 représente au moins 1000 mmWS, de préférence au moins 5000 mmWS.

12. Sous-couche de toiture selon une des revendications précédentes, **caractérisée en ce que** la couche support (4) présente un non tissé consolidé par voie thermique et/ou au moyen d'aiguilles, de jets d'eau et/ou de jets d'air et/ou en ce que la couche support (4) présente un non tissé de PP, un non tissé de PET ou un non tissé constitué d'un mélange PP/PET.

13. Sous-couche de toiture selon une des revendications précédentes, **caractérisée en ce que** la résistance à la traction, notamment de la couche support (4), est, dans la direction longitudinale, conformément à DIN EN 13859, d'au moins 200 N/5cm, de préférence au moins 200 N/5cm, préférablement au moins 450 N/5cm et/ou **en ce que** la résistance à la traction, notamment de la couche support (4), est, dans la direction transversale, conformément à DIN EN 13859, d'au moins 150 N/5cm, de préférence au moins 200 N/5cm, préférablement au moins 450 N/5cm.

14. Couche supérieure constituée d'au moins deux sous-couches de toiture (1) selon une des revendications précédentes,
**caractérisée en ce**
**que** les sous-couches de toiture (1) sont liées ensemble par voie thermique, au moyen d'un agent de soudage au solvant et/ou par collage.

15. Couche supérieure selon la revendication 14, **caractérisée en ce que** le chevauchement des sous-couches de toiture (1) est d'au moins 5 cm et/ou **en ce que** la résistance au cisaillement de la ligne de jonction, conformément à DIN EN 12317-2, est d'au moins 250 N et/ou **en ce que** la couche de protection (6) et/ou la couche fonctionnelle (5) de la sous-couche de toiture (1) sont liées par voie thermique, au moyen d'un agent de soudage au solvant et/ou par collage avec la couche de protection (6) et/ou la couche fonctionnelle (5) d'une autre sous-couche de toiture (1).
